Europäisches Patentamt

European Patent Office

Office européen des brevets

(19)

(11) Publication number: **0 377 934 B1**

# EUROPEAN PATENT SPECIFICATION

(12)

(45) Date of publication of patent specification: **15.09.93**  (51) Int. Cl.⁵: **F16F 1/04**

(21) Application number: **89304339.8**

(22) Date of filing: **28.04.89**

(54) **Coil spring.**

(30) Priority: **10.01.89 JP 4095/89**

(43) Date of publication of application:
**18.07.90 Bulletin 90/29**

(45) Publication of the grant of the patent:
**15.09.93 Bulletin 93/37**

(84) Designated Contracting States:
**DE FR GB**

(56) References cited:
**EP-A- 0 143 515**
**FR-A- 2 609 125**

**PATENT ABSTRACTS OF JAPAN, vol. 10, no.
114 (M-473)[2171], 26th April 1986; & JP-A-60
241 535 (SANKOU SENZAI) 30-11-1985**

**PATENT ABSTRACTS OF JAPAN, vol. 9, no.
209 (M-407)[1932, 27th August 1985, page 95
M 407; & JP-A-60 69 337 (MURATA HAT-
SUJIYOU K.K.)**

(73) Proprietor: **SANKO SENZAI KOGYO
KABUSHIKI KAISHA
14 Umezunishiura-cho Sakyo-ku
Kyoto-shi Kyoto-fu(JP)**

(72) Inventor: **Komura, Syoichi Sanko Senzai
Kogyo K.K
14 Umezunishiura-cho Sakyo-ku
Kyoto-shi Kyoto-fu(JP)**
Inventor: **Toyofuku, Hiroyuki Sanko Senzai
Kogyo K.K
14 Umezunishiura-cho Sakyo-ku
Kyoto-shi Kyoto-fu(JP)**

(74) Representative: **Tillbrook, Christopher John
Chris J Tillbrook & Co 5 Old Rectory Close
Churchover
Rugby, Warwickshire CV23 0EN (GB)**

EP 0 377 934 B1

## Description

The present invention relates to coil spring construction and is particularly, but not exclusively, concerned with the cross-sectional shape of a strand for incorporation in such a coil spring.

A coil spring is commonly formed of a strand of circular cross-section, presenting the problem that, when it is subjected to axial loads, maximum stress is produced at a point on the inner periphery of the coil, inducing localized crack formation, leading to breakage failure.

In order to solve this problem, there has been proposed a system (hereinafter referred to as a multiple-arc system) in which the strand is afforded a substantially oval cross-sectional shape, defined by combining a plurality of arcs of different radii of curvature.

For example, Japanese Patent Application number 60 241 535 discloses a coil spring strand whose cross-sectional shape is determined by a combination of partial circular curves or arcs into a closed loop.

In such multiple-arc system, the radii of curvature of arcs on the various portions of the cross-sectional circumference are arranged to lower the maximum stress, compared with the distribution of stresses in a circular cross section; thus, achieving observable improvements over products utilising strands of circular cross section.

However, in the known multiple-arc system, since the radii of curvature of arcs which define the various portions of the cross-sectional circumference of the strand differ incrementally from one another, the distribution of surface stresses is discontinuous at the boundaries of adjacent arcs, tending to induce stress concentration cracking.

Generally, the service life of springs is determined by the maximum stress on the cross-sectional circumference of the strand, and in this regard the multiple-arc system is still inadequate in lowering the maximum stress on the cross-sectional circumference of the strand.

The present invention has evolved to resolve such prior art problems, by providing a strand or a coil spring having a cross sectional shape which promotes the smooth distribution of surface stresses over the cross sectional circumference of the strand, and further reduces the maximum stress imposed.

According to one aspect of the invention there is provided a strand whose cross-sectional shape is determined by a combination of multiple partial curves or arcs combined to form a closed loop characterised in that said arcs are portions of a clothoid, as a curve whose radius varies inversely in proportion to its length, and in that the strand width w and thickness t, are related to each other such that $1.1 \leq c \leq 1.7$, where $c = w/t$,.

Further, desirably, tangents drawn at the boundaries of combined partial curves coincide directionally.

According to another aspect of the invention there is provided a coil spring formed of a strand according to either of the two immediately preceding paragraphs.

In a clothoid, the radius of curvature changes continuously in inverse proportion to the length of the curve; therefore, combining a plurality of partial curves, curve portions or arcs which are portions of the clothoid, it is possible to form a strand having a smoothly continuous cross-sectional closed loop shape.

When such partial curves are combined, the join, or transition, at each boundary between two adjacent partial curves can be made smooth, without any unevenness, if the tangents to any adjacent two of such partial curves at their boundary where they are combined coincide directionally with one another.

Therefore, it becomes possible to achieve a continuous distribution of surface stresses and to lower the maximum stress.

There now follows a description of some specific embodiments of the invention, by way of example only, with reference to the accompanying drawings, in which:

Fig. 1 is an explanatory view of a clothoid employed in the present invention;

Fig. 2 is a sectional view showing an example of a strand having an oval cross section;

Figs. 3 through 7 are explanatory views showing an exemplary method of constructing the upper half of the cross sectional shape of the strand shown in Fig. 2 from a clothoid;

Fig. 8 is a cross sectional view of a completed strand according to said method;

Fig. 9 is a graph showing the distribution of stresses in the strand of Fig. 8;

Fig. 10 is a view for explaining another method for constructing the cross sectional shape of a strand from a clothoid;

Fig. 11 is a cross-section of a strand constructed by the method of Figure 10.

Fig. 12 is a graph showing a comparison of stress distributions between conventional strands and inventive strands; and

Fig. 13 is a graph showing the distribution of radii of curvature for the corresponding strands of Fig. 12.

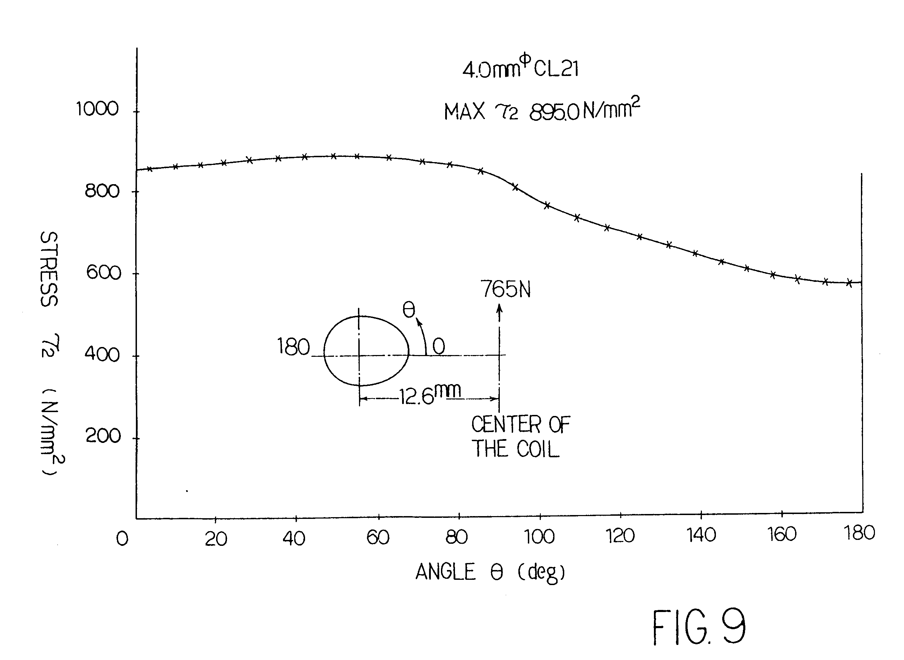

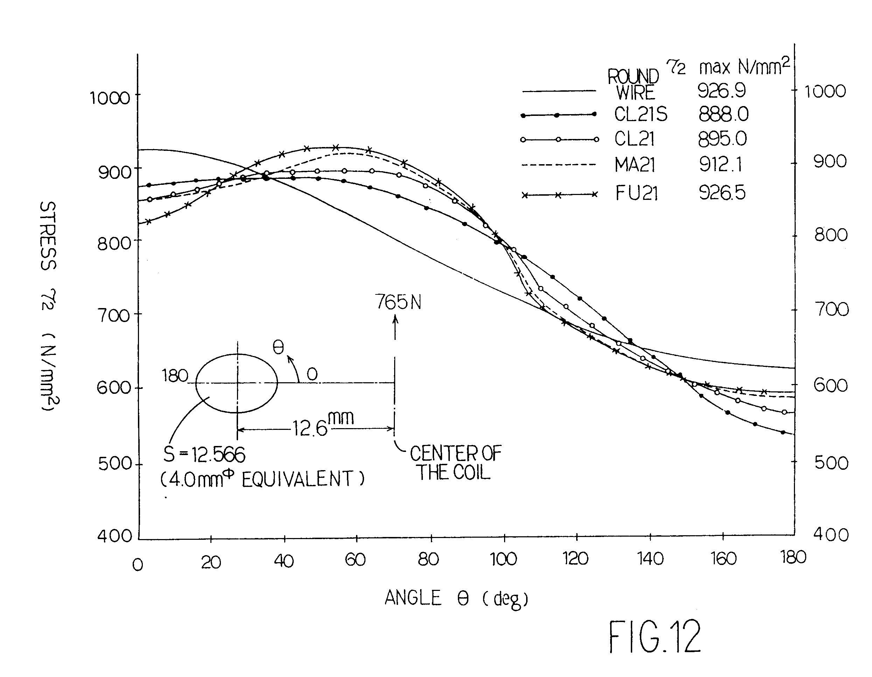

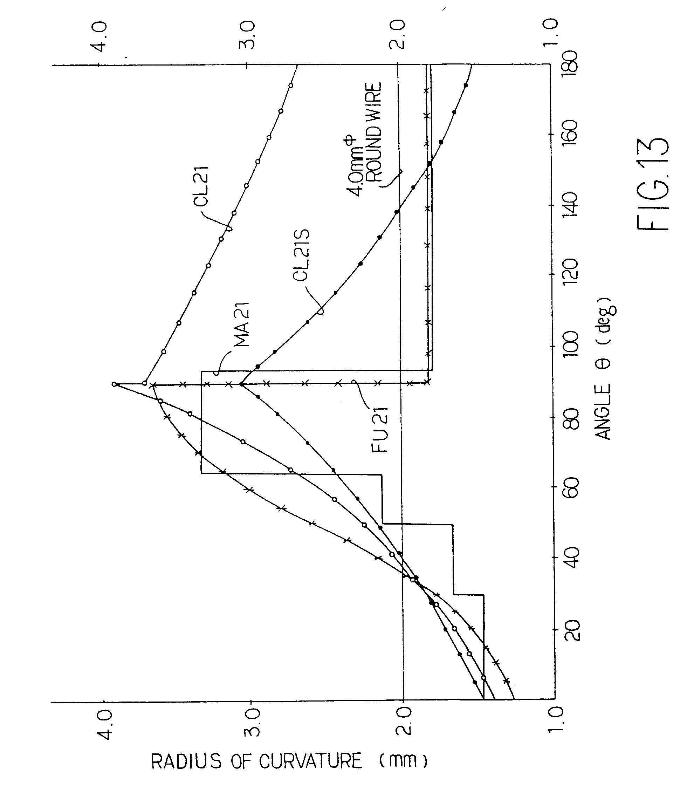

In Figures 12 and 13, CL21, CL21S represent curves according to the present invention.

2

Generally, a clothoid is defined by its radius of curvature changing continuously, in inverse proportion to the length of the curve.

The equation of a clothoid is expressed, using the length u of the curve as a parameter, as follows:

$$x = a \cdot c(u) = \alpha \int_0^u \cos \frac{\pi u}{2}\, du$$
$$\dots\dots (1)$$
$$y = a \cdot s(u) = \alpha \int_0^u \sin \frac{\pi u}{2}\, du$$

where a is a proportionality constant.

The direction of a tangent, $\phi$, is:

$$\emptyset = \frac{\pi u^2}{2} \dots (2)$$

The radius of a curvature, $\rho$, is:

$$\rho = \pm \frac{\alpha}{\pi u} \qquad (3)$$

These functions x and y cannot be handled in elementary functions; however, $\phi$ and $\rho$ are functions of the length u of the curve and have simpler forms, as indicated by equations (2) and (3), so that they are easier to handle.

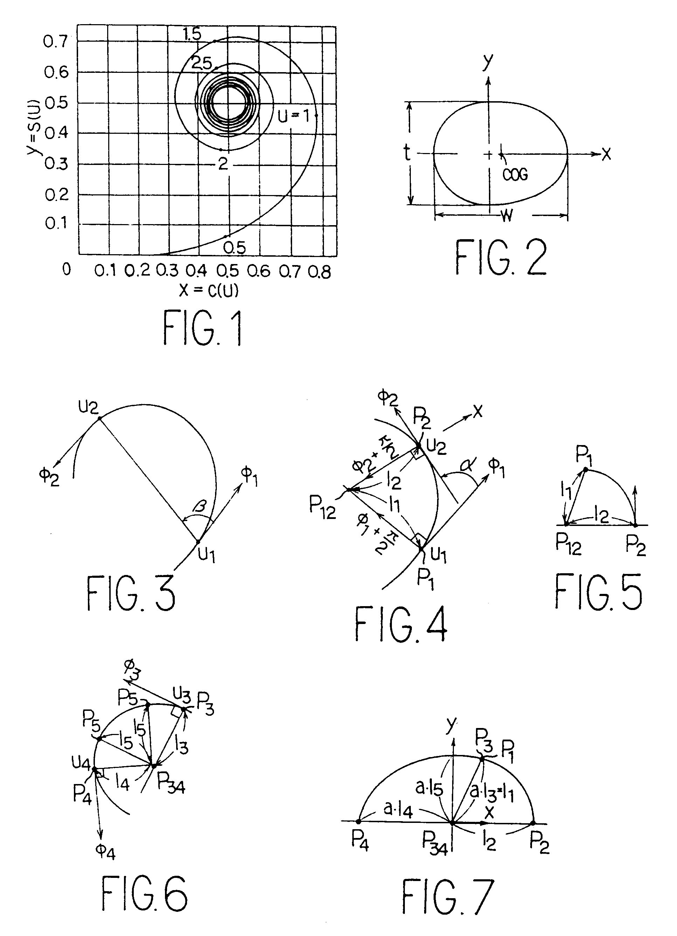

On the other hand, an example of a strand having an oval cross section is shown in Fig. 2.

This example is constructed by combining an ellipse and a circle, wherein w indicates the width of the strand, t the thickness and COG the center of gravity.

The present invention determines the cross sectional shape of the oval cross sectional strand by using a combination of curves, curve portions, or arcs taken from a clothoid.

An example of such a method will now be described.

In Fig. 2, since the curve is symmetrical with respect to the x-axis, it is only necessary to construct the curve with respect to the first and second quadrants in the upper half of the curve.

However, it is necessary to determine the curve so that the directions of tangents to the curve are $\pi/2$ and $-\pi/2$.

Next, c = w/t (width/thickness ratio) is given or determined in advance.

The construction of the upper half of the curve above the x-axis in Fig. 2 will now be considered by using a curve which is a portion of a clothoid.

Firstly, as shown in Fig. 3, a portion of the clothoid is taken and $u_1$ is given, in order to calculate $u_1 \to x_1$, $y_1$, $\phi_1$ by equations (1) and (2).

By setting $\phi_2 = \phi_1 + \pi$, $u_2$ is calculated from equation (2) and $u_2 \to x_2$, $y_2$ are found by equation (1).

At this time, in order to construct the upper half of the curve above the x-axis in Fig. 2, by using a portion of the clothoid, it is at least necessary that in Fig. 3 the angle $\beta$ between the line $\overline{u_1\ u_2}$ and the tangent $\phi_1$ to the $u_1$ be $\beta = \pi/2$.

However, the presence of such $u_1$ and $u_2$ values cannot be determined.

Thus, the case of taking two partial curves from the clothoid and connecting or combining them together to construct the curve in the upper half above the x-axis in Fig. 2 will now be considered.

In this case, as shown in Fig. 4, the included angle $\alpha$ between tangents $\phi_1$ and $\phi_2$ is given. When $\alpha < \pi/2$, first, $u_1$ is determined and $u_1 \to x_1$, $y_1$, $\phi_1$ are found from equations (1) and (2).

By setting $\phi_2 = \phi_1 + \alpha$, $u_2$ is found from equation (2) and $u_2 \to x_2$, $y_2$ are found from this $u_2$ value using equation (1).

Let the coordinates of the positions of said $u_1$ and $u_2$ be P1 and P2, and the coordinates of the position of the intersection of straight lines orthogonal to the tangents $\phi_1$ and $\phi_2$ at the two points be P12.

3

The respective lengths of the line segments $\overline{P1\,P12}$ = $l_1$ and $\overline{P2\,P12}$ = $l_2$ will then be calculated.

This curve is inverted around the line segment $\overline{P2\,P12}$ serving as an axis and is moved until the $u_2$ line coincides with the x-axis (see Fig. 5).

Then, as shown in Fig. 6, by taking a portion of the clothoid and suitably determining the $u_3$, $u_3$ --> $x_3$, $y_3$, $\phi_3$ is found from equations (1) and (2).

$\phi_4$ is found such that $\phi_4 = \phi_3 + \pi - \alpha$, and $u_4$ is found by equation (2) and $x_4$ and $y_4$ are found from this $u_4$ by equation (1).

Let the coordinates of the positions of said $u_3$ and $u_4$ be P3 and P4, and the coordinates of the position of the intersection between straight lines orthogonal to the tangents $\phi_3$ and $\phi_4$ at the two points be P34.

Now, either the line segment $\overline{P34\,P4}$, or the line segment $\overline{P3\,P34}$ is moved until it coincides with the x-axis.

The result will be the same, irrespective of which line segment is moved; but herein will be described a case in which the line segment $\overline{P34\,P4}$ is brought into coincidence with the x-axis.

In Fig. 7, the curves $u_3$ and $u_4$ of Fig. 6 are taken and brought into coincidence with the x-axis.

Let the length of the line segment $\overline{P3\,P34}$ be $a \cdot l_3$, and let it be equal to $l_1$ in Fig. 5 ($a \cdot l_3 = l_1$).

Similarly, the length of the line segment $\overline{P4\,P34}$ is expressed as $a \cdot l_4$.

Now, $u_5$, $x_5$ and $y_5$, which provide $\phi_4 - \pi/2 = \phi_5$, are found from equations (2) and (1).

Let the coordinates of the position of $u_5$ be $P_5$ and the length of the line segment $\overline{P34\,P5}$ be $a \cdot l_5$.

Then $u_3$ is calculated such that $(a \cdot l_4 + l_1)/2a \cdot l_5 = w/t = c$. ($f = l_2\ a \cdot l_3 = O$).

Sometimes, there will be no solution to this, but the value of $u_3$ which results from gradually increasing the value of $u_1$ can be found.

Let the range in which the solution to u1 exists be such that $u_{1s} \leq u_1 \leq u_{1e}$. Then, it becomes possible to perform a computer simulation with respect to the respective shapes, by the finite element method or boundary element method, in order to optimise the distribution of surface stresses.

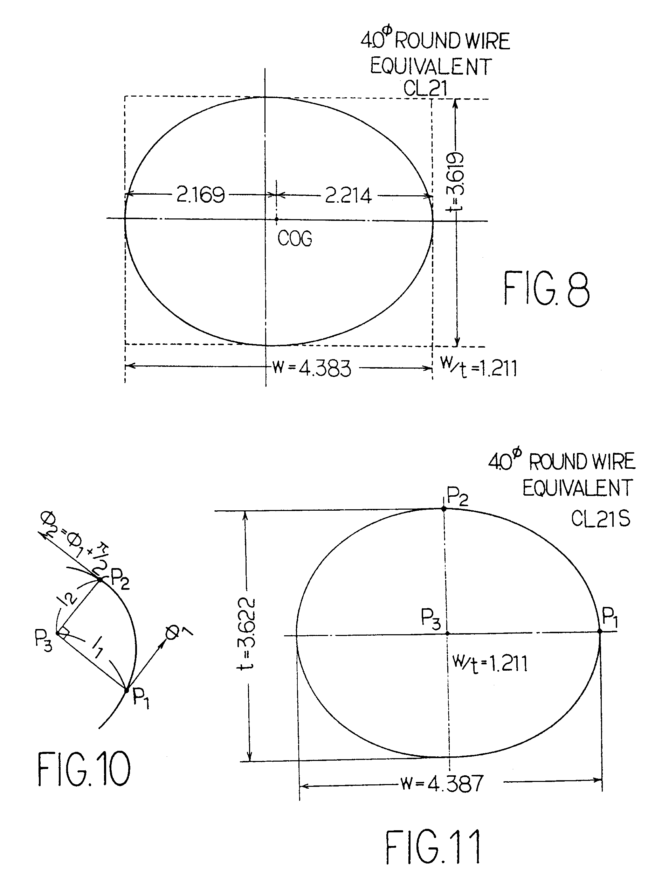

Fig. 8 shows an example of a solution, though not an optimum, in which $w/t = 1.21$ and $\phi = \pi/2$, and Fig. 9 shows the stress distribution thereof.

When the curves shown in Figs. 5 and 7, respectively, are brought together, the upper half curve above the x-axis shown in Fig. 2 is obtained.

When this curve is combined with a second curve, which is obtained by inverting the first curve, a curve CL21 in the form of a closed loop shown in Fig. 8 is obtained.

The joins in this curve CL21 coincide on the x-axis and somewhat deviate in other regions.

Next, as shown in Fig. 10, a = w/t is determined and P1 and P2, which ensures that $l_1 / l_2$ in Fig. 1O is equal to a, and that $\phi_2$ is $\phi_2 = \phi_1 + \pi/2$, are found from equations (1) and (2) in the same manner as described above.

This is used as a curve for the first quadrant, and mirror-symmetrically extended to the second, third and fourth quadrants, and these four curves are put together, thereby providing a curve CL21S in the form of a closed loop which is symmetrical with respect to the x- and y-axes, as shown in Fig. 11.

In the case of this curve CL21S, the tangents at the respective joins coincide directionally with one other.

The distribution of stresses on the sectional circumference of a coil spring formed of a strand whose cross sectional circumference has the curve CL21S so constructed is improved, compared with a spring of elliptic cross-section having the same area.

With such an improved coil spring for use with valves, it has been found that good results are obtained with the maximum stress being lowered for a D/d (coil diameter/strand diameter) = 6 or thereabouts.

Fig. 12 is a graph showing the stress distributions of strands having the curves CL21 and CL21S according to the present invention in their respective cross sections, a strand having a multi-arc curve MA21, and a round wire.

The cross sectional area corresponds to that of a strand of 4.0 mm in diameter, the coil radius being 12.6 mm, the axial load being 765 N, the $\theta$ being measured over 180 degrees extending from the inner peripheral surface to the outer peripheral surface.

In the round wire, the maximum stress is 926 N/mm$^2$ at $\theta = 0°$.

In the multi-arc curve MA21, the maximum stress is 912.1 N/mm$^2$ at $\theta = 60$ degrees or thereabouts.

In the present invention, the maximum stress is 895.0 N/mm$^2$ for the curve CL21 and 888.0 N/mm$^2$ for the curve CL21S, both values being lower than the conventional values; particularly, the region where the maximum stress occurs extends from $\theta = 0°$ to $\theta = 80°$, covering a wide range where it is distributed substantially at the same level; ie stress concentration hardly arises.

Fig. 13 is a graph showing the distribution of the respective radii of curvature of the curves shown in Fig. 12, with $\theta$ expressed in the same way.

In Fig. 13, the curve FU21 is a combination of a semi-circle and a semi-ellipse; the curve CL21S continuously changes in radius of curvature; and in the case of the curve CL21, though there is discontinuity, the amount thereof is smaller than in the case of the curve FU21 as a combination of a semi-circle and a semi-ellipse.

Further, in the present invention, the ratio w/t of the width w of the strand to its thickness t is restricted to $1.1 \leqq c \leqq 1.7$ for the following reason.

As for the lower limit, if it is less than 1.1, though the distribution of stresses is somewhat flat as compared with that of the round wire, there is no particular advantage worthy of adoption.

Thus, for example, a strand of 3.93 mm in diameter will produce a stress which corresponds to that for the round wire of 4.0 mm in diameter, but there is only an advantage of 0.25 mm in terms of pitch clearance for each convolution of the spring. With any other value below that, the situation will be the same as when the round wire is used.

In the present invention, a curve CL21 and a symmetrical curve CL21S have been exemplified; however, the method of utilizing a clothoid in connection with each curve may be deployed in a manner in which such curve is more finely divided.

Thus, overall, by means of the invention, the distribution of surfaces stresses on the cross-sectional circumference of a strand can be made smoothly continuous, further reducing the maximum stress in the coil spring incorporating such a strand.

As a result, the fatigue limit is improved and a longer service life is realized. Further, for a coil spring which produces the same stress, the cross-sectional area of the strand can be reduced by an amount corresponding to the reduction in the maximum stress and hence the diameter of the strand can be reduced, while reducing the compressed strength of the coil spring.

## Claims

1. A strand whose cross-sectional shape is determined by a combination of multiple partial curves or arcs combined to form a closed loop characterised in that
said arcs are portions of a clothoid, as a curve whose radius varies inversely in proportion to its length,
and in that the strand width w and thickness t, are related to each other such that $1.1 \leqq c \leqq 1.7$, where c = w/t,.

2. A strand as claimed in Claim 1, characterized in that the tangents to any adjacent two of said partial curves at their boundary where they are brought together coincide directionally with one another.

3. A coil spring formed of a strand according to Claim 1 or Claim 2.

## Patentansprüche

1. Litze, deren Querschnittsform von einer Kombination aus zahlreichen, zu einer geschlossenen Schleife kombinierten Teilkurven oder Bögen bestimmt wird, dadurch gekennzeichnet, daß die Bögen als eine Kurve, deren Radius sich umgekehrt proportional zu ihrer Länge ändert, Abschnitte einer Klothoide sind, und daß die Breite w und Dicke t1 der Litze so miteinander in Beziehung stehen, daß $1{,}1 \leqq c \leqq 1{,}7$, wobei c = w/t.

2. Litze nach Anspruch 1, dadurch gekennzeichnet, daß die Tangenten von jeweils zwei benachbarten der Teilkurven an deren Grenze, wo sie zusammengeführt werden, richtungsmäßig zusammenfallen.

3. Schraubenfeder, die aus einer Litze nach Anspruch 1 oder 2 gebildet wird.

## Revendications

1. Brin de section transversale de forme définie par une combinaison d'une pluralité de courbes partielles ou d'arcs, associés pour former une boucle fermée, caractérisé en ce que
lesdits arcs sont des portions d'une spirale d'Euler, une courbe dont le rayon varie de façon inversement proportionnelle à sa longueur,
et en ce que la largeur w du brin et son épaisseur t sont liées par la relation $1{,}1 \leqq c \leqq 1{,}7$, avec c = w/t.

2. Brin selon la revendication 1, caractérisé en ce que les tangentes à deux courbes adjacentes quelconques de ces courbes partielles à leur limite où elles se joignent, sont en coïncidence directionnelle l'une avec l'autre.

3. Ressort hélicoïdal constitué d'un brin selon la revendication 1 ou la revendication 2.

FIG. 1

FIG. 2

FIG. 3

FIG. 4

FIG.5

FIG.6

FIG. 7

40$^\phi$ ROUND WIRE
EQUIVALENT
CL 21

2.169　　　2.214

COG

t = 3.619

FIG. 8

W = 4.383　　　$W/t$ =1.211

40$^\phi$ ROUND WIRE
EQUIVALENT
CL21S

$\phi_2 = \phi_1 + \frac{\pi}{2}$

$l_2$

P$_2$

$\phi_1$

P$_3$　$l_1$

P$_1$

FIG. 10

P$_2$

t = 3.622

P$_3$　　P$_1$

$W/t$ =1.211

W = 4.387

FIG. 11

4.0mm$^\phi$ CL21

MAX $\tau_2$ 895.0 N/mm$^2$

FIG. 9

FIG.12

FIG.13